# FASCICULE DE BREVET EUROPEEN

(11) **EP 3 575 223 B1**
(45) Date de publication et mention de la délivrance du brevet: **16.12.2020**
(21) Numéro de dépôt: 19177126.0
(22) Date de dépôt: 28.05.2019
(51) Int. Cl.: B64F 1/28, B64F 1/00, B60L 53/00, B60L 53/14

(54) **SYSTEME DE RAVITAILLEMENT POUR UN VÉHICULE**
AUFTANKSYSTEM FÜR EIN FAHRZEUG
SUPPLY SYSTEM FOR A VEHICLE

(30) Priorité: 29.05.2018 FR 1854550
(43) Date de publication de la demande: 04.12.2019
(73) Titulaire: Safran Helicopter Engines, 64510 Bordes (FR)
(72) Inventeur: BESSE, Jean-Louis, Robert, Guy, 77550 Moissy-Cramayel (FR); GUILLEMET, Pascal, 77550 Moissy-Cramayel (FR); CHESNEL, Steve, Mickaël, Antony, 87000 Limoges (FR)
(74) Mandataire: Ernest Gutmann - Yves Plasseraud S.A.S.

(56) Documents cités:
- CN-A- 1 478 670
- DE-A1-102007 003 458
- KR-A- 20170 040 961
- US-A- 4 993 463
- US-A1- 2015 123 462
- US-A1- 2017 126 031
- US-A1- 2017 217 323

## Description

### DOMAINE

La présente invention concerne un système de ravitaillement pour un aéronef, tel par exemple qu'un aéronef à décollage et atterrissage verticaux.

### CONTEXTE

Avec le développement de l'hybridation des moyens de transport, terrestres et aériens, il devient nécessaire de développer des plates-formes permettant la recharge ou le ravitaillement en différentes sources d'énergie de manière automatique.

Généralement, une des sources d'énergie des véhicules hybrides est l'énergie électrique. Elle est associée à une source d'énergie fossile, pouvant être par exemple du carburant tel que de l'essence ou de l'hydrogène par exemple.

Aujourd'hui, la recharge et le ravitaillement de tels véhicules se font manuellement, par le bais d'un câble et d'une connectique de liaison pour le rechargement électrique, et par le biais d'un tuyau muni d'un pistolet distributeur pour le ravitaillement en carburant.

Les documents US 2017/126031, US 2015/123462 et US4993463 décrivent des systèmes de rechargement de ravitaillement.

Il est connu de procéder à un ravitaillement en carburant, en vol, à l'aide d'une perche de ravitaillement, notamment pour les aéronefs militaires. Lors d'un tel ravitaillement, la perche d'un avion de ravitaillement, équipée d'un panier en forme d'entonnoir, est dirigée manuellement par un opérateur de l'avion de ravitaillement vers une perche de l'aéronef à ravitailler. Une connexion hydraulique est réalisée entre les deux perches avant le transfert de carburant.

Par ailleurs, il existe des procédés connus de rechargement d'une batterie d'un véhicule consistant à amener le véhicule à recharger dans une position et une orientation déterminées, en regard de contacteurs d'un dispositif de charge de la batterie. Le dispositif de charge est adapté à l'accumulateur à recharger, et n'est donc pas interopérable avec différents types de véhicule.

De tels procédés de ravitaillement nécessitent une intervention humaine, ou au moins supervisée par un opérateur, et/ou une orientation prédéfinie et maîtrisée du véhicule à recharger.

Par ailleurs, aucune solution ne permet actuellement une recharge électrique et un ravitaillement en carburant d'un véhicule hybride sans intervention humaine.

L'invention a notamment pour but d'apporter une solution simple, efficace et économique au problème précité.

### RESUME DE L'INVENTION

A cette fin, la présente invention propose un système de ravitaillement pour un véhicule, le système étant défini dans la revendication 1.

Un tel système de ravitaillement permet ainsi de détecter, de façon automatisée, l'orientation et le positionnement du véhicule de façon à pouvoir déterminer, à partir de ces informations, les potentiels électriques à appliquer à chaque dalle de manière à pouvoir recharger l'accumulateur électrique du véhicule. Par comparaison avec l'art antérieur, l'invention permet ainsi d'éviter l'étape fastidieuse consistant à positionner et orienter précisément le véhicule par rapport aux moyens de rechargement de l'accumulateur électrique.

En outre, les moyens d'acheminement permettent le rechargement du réservoir du véhicule hybride en carburant.

L'accumulateur électrique peut comporter une batterie ou un super-condensateur.

Dans un système de ravitaillement selon l'invention, la perche est apte à être raccordée à un réservoir du véhicule, par exemple par l'intermédiaire d'un point humide. Un point humide est par exemple une entrée de carburant, reliée à un réservoir.

Selon une autre caractéristique de l'invention, la perche peut être mobile dans au moins une direction, par exemple verticalement.

La perche peut être mobile dans trois directions, par exemple verticalement et selon deux directions horizontales.

La plate-forme principale peut comporter des moyens de fermeture des ouvertures, mobiles entre une position ouverte permettant d'ouvrir l'ouverture en vue du passage de la perche, et une position fermée permettant de refermer ladite ouverture.

Les moyens de fermeture peuvent comporter au moins l'une desdites dalles, montée pivotante par rapport à une partie fixe de la plate-forme principale.

Les moyens de fermeture peuvent comporter au moins une plaque montée de façon pivotante par rapport à l'une des dalles adjacentes.

Les moyens de fermeture peuvent être rappelés vers leur position de fermeture par des moyens de rappel.

Le déplacement des moyens de fermeture vers leur position ouverte peut être actionné par déplacement de la perche, par exemple par déplacement vertical vers le haut de la perche. L'extrémité supérieure de la perche peut par exemple venir en appui sur ladite plaque pivotante ou sur ladite dalle pivotante.

La plaque pivotante ou la dalle pivotante est montée pivotante sur une partie fixe de la plate-forme principale, à une première extrémité de ladite plaque ou de ladite dalle, une seconde extrémité de ladite plaque ou de ladite dalle pouvant comporter des moyens de roulement ou des galets. Lesdits moyens de roulement ou les galets peuvent venir en appui sur la perche en fonctionnement de façon à son endommagement.

Le système de ravitaillement peut comporter des moyens de localisation d'un orifice du réservoir du véhicule et des moyens de positionnement de la perche aptes à déplacer la perche de façon à ce qu'elle puisse être connectée à l'orifice du réservoir en position déployée.

Le système de ravitaillement peut également comporter des moyens de détection du niveau de charge de l'accumulateur électrique et/ou du type d'accumulateur électrique.

De cette manière, il est possible d'ajuster la tension délivrée à l'accumulateur et/ou l'intensité en fonction de son niveau de charge, de son type et/ou de paramètres liés au véhicule ou de paramètres liés à l'environnement extérieur et /ou de la stratégie de charge demandée, fonction de paramètres tels que la vitesse de charge par exemple.

La détection du niveau de charge ou du type d'accumulateur peut être obtenue par mesure de tension ou encore par télétransmission. Dans ce dernier cas, le niveau de charge peut par exemple être calculé par un calculateur intégré au véhicule ou distant, en fonction de données liées au vol ou à la distance parcourue, de paramètres du véhicule ou de paramètres extérieurs, entre autres.

Les moyens de détection de l'anode et de la cathode peuvent être conçus pour :
- déterminer le potentiel électrique ou l'impédance de chaque dalle conductrice de la plate-forme principale,
- en déduire au moins une dalle en contact avec l'anode et au moins une dalle en contact avec la cathode.

Le système de ravitaillement peut comporter une plate-forme secondaire supportant des équipements destinés à être positionnés par rapport au véhicule, ladite plate-forme secondaire étant mobile, par exemple mobile en rotation.

La plate-forme secondaire et les équipements peuvent ainsi être orientés et positionnés par rapport au véhicule en fonction de sa position. La plate-forme secondaire peut être mobile par rapport à la plate-forme principale, cette dernière pouvant alors être fixe.

Dans ce cas, il est possible d'orienter la plate-forme secondaire après qu'un véhicule ait été positionné sur la plate-forme principale.

En variante, la plate-forme principale et la plate-forme secondaire peuvent être mobiles de façon à être orientées ensemble, en fonction de la position et de l'orientation d'un véhicule à l'approche.

Les équipements peuvent être par exemple des équipements de ravitaillement, ou encore une passerelle de transbordement amovible.

Le système de ravitaillement peut comporter des moyens de détection et de guidage de l'aéronef, tels par exemple qu'un système d'atterrissage aux instruments ou ILS (« Instrument Landing System », en anglais), et des moyens de déplacement de la plate-forme secondaire et/ou de la plate-forme principale, en fonction de l'orientation du véhicule.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

la figure 1 est une vue illustrant, de façon schématique, un système de ravitaillement selon une forme de réalisation de l'invention;
la figure 2 illustre, de façon schématique, l'étape de rechargement de l'accumulateur électrique d'un véhicule disposé sur la plate-forme principale du système de ravitaillement;
la figure 3 illustre, de façon schématique, l'étape de ravitaillement du réservoir du véhicule ;
la figure 4 illustre le mécanisme d'ouverture et de fermeture d'une ouverture entre deux dalles permettant le passage d'une perche du système de ravitaillement ;
la figure 5 illustre une autre forme de réalisation où certaines dalles de plate-forme principale sont pivotantes par rapport à des supports de dalle, lorsque les dalles sont en position fermée ;
la figure 6 illustre la même forme de réalisation que la figure 5, où une des dalles est en position ouverte.

### DESCRIPTION DETAILLEE

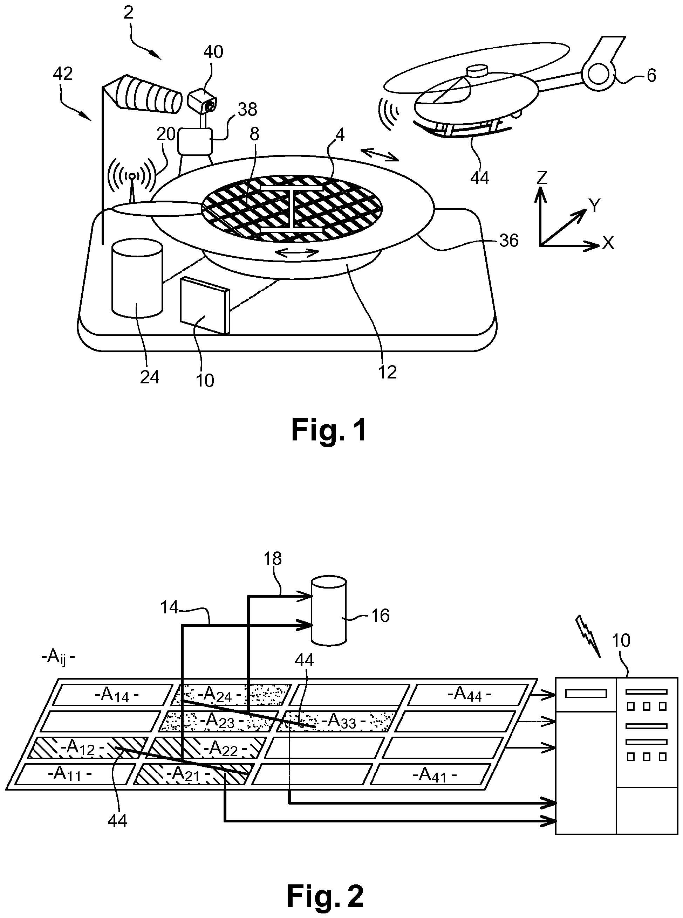

La figure 1 illustre un système de ravitaillement 2 selon une forme de réalisation de l'invention. Le système de ravitaillement 2 comprend une plate-forme principale 4 apte à soutenir un véhicule 6 venant se positionner sur la plate-forme 4 pour la réalisation de son ravitaillement. La plate-forme principale 4 présente par exemple la forme générale d'un disque, composé d'une pluralité de dalles 8. Les dalles 8 sont des plaques réalisées en un matériau conducteur de sorte que les dalles 8 soient aptes à conduire un courant électrique.

Les dalles 8 sont isolées électriquement les unes des autres. En d'autres termes, la conduction électrique entre les dalles 8 est empêchée à l'aide d'isolants électriques. Ainsi, les dalles 8 conductrices, isolées entre elles, forment un maillage, de préférence sur toute la surface de la plate-forme 4 principale. Chacune des dalles 8 de la plate-forme principale 4 est reliée électriquement à une armoire électrique 10, apte à délivrer un courant électrique provenant d'un réseau électrique.

La plate-forme principale 4 est par exemple montée de façon mobile en rotation sur un socle 12 fixe. Une unité de commande, reliée à la plate-forme principale 4, permet de commander l'orientation de la plate-forme principale 4 autour de son axe de rotation.

Le système de ravitaillement 2 comprend des moyens de détection conçus pour détecter au moins une dalle 8 en contact avec une anode 14 reliée à un accumulateur 16 électrique d'un véhicule 6, mieux visible sur la figure 2, et au moins une dalle 8 en contact avec une cathode 18 reliée à un accumulateur 16 électrique d'un véhicule 6. Le procédé de détection de dalles 8 en contact avec une anode 14 ou une cathode 18 reliées électriquement à un accumulateur 16 électrique d'un véhicule 6 sera mieux décrit après.

Les moyens de détection comportent des moyens de mesure de la tension et de l'impédance des dalles 8, comportant une carte électronique d'acquisition de données et une unité de traitement.

Le système de ravitaillement 2 comporte de plus des moyens de rechargement comprenant des moyens de commutation, comme par exemple des relais électromagnétiques, aptes à assurer l'alimentation en courant électrique par l'armoire électrique 10, de certaines au moins des dalles 8 de la plate-forme principale 4.

Le système de ravitaillement 2 comporte également des moyens de détection aptes à détecter le niveau de charge d'un accumulateur 16 électrique et/ou le type d'accumulateur 16 électrique. Les moyens de détection peuvent comporter des moyens de télétransmission 20 aptes à échanger, à distance, des informations avec le véhicule 6.

Les moyens de détection et de rechargement peuvent être commandés via une unité de commande par un opérateur, ou être automatisés.

Les dalles 8 de la plate-forme principale 4 peuvent présenter des formes et/ou des dimensions variables ou similaires les unes par rapport aux autres. En particulier, les dalles 8 peuvent présenter une superficie, de l'ordre du dixième de la surface projetée hors voilure, du plus petit véhicule 6 déclaré apte à utiliser la plate-forme 4. La faible dimension des dalles 8 par rapport à celle de la plate-forme principale 4 permet notamment d'assurer un minimum de sécurité des individus qui pourraient être présents sur la plate-forme 4, en réduisant le risque qu'ils ne marchent simultanément sur des dalles 8 alimentées en polarité inverse lors de la recharge de l'accumulateur 16.

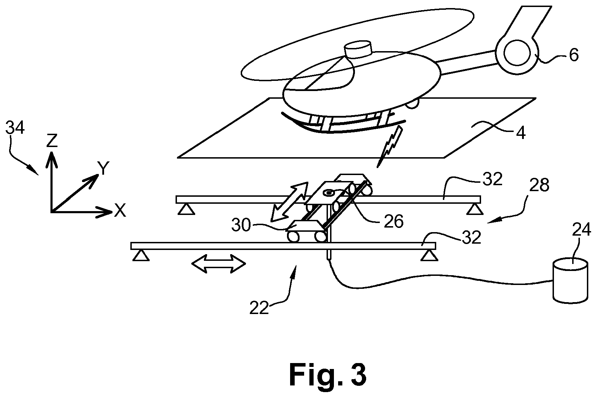

Le système de ravitaillement 2 comprend également des moyens d'acheminement 22 d'un carburant liquide ou gazeux, aptes à recharger un réservoir du véhicule 6, visibles sur la figure 3. Ces moyens d'acheminement 22 sont reliés à un réservoir principal 24 contenant le carburant pouvant être par exemple de l'essence ou de l'hydrogène.

Les moyens d'acheminement 22, visibles sur la figure 3, sont disposés sous la plate-forme principale 4 et comprennent notamment une perche 26. La perche 26 est rétractable, c'est-à-dire qu'elle est mobile entre une position rétractée dans laquelle la perche 26 est apte à être écartée du véhicule 6, et une position déployée dans laquelle la perche 26 est apte à être raccordée à un réservoir du véhicule 6. La perche 26 est ainsi mobile selon la direction Z.

Des moyens de positionnement 28 de la perche 26 permettent de plus de déplacer la perche 26 de façon à ce qu'elle puisse être connectée à l'orifice du réservoir en position déployée. Dans l'exemple de la figure 3, les moyens de positionnement 28 de la perche comprennent en particulier un chariot 30.

La perche 26 est montée mobile en translation selon une direction Y sur le chariot 30. Le chariot 30 est ici monté sur deux rails 32 fixes, orientés suivant une direction X. Les directions X, Y et Z forment un repère orthonormé 34. De cette manière, la perche 26 est mobile en translation suivant les directions X, Y et Z. Bien entendu, il est possible d'utiliser d'autres moyens de déplacement permettant d'assurer le bon positionnement de la perche 26 sous la plate-forme principale 4.

Les dalles 8 peuvent comporter des ouvertures permettant le passage de la perche 26, notamment en position déployée.

La perche 26 comprend une partie semi-rigide à son extrémité, de façon à faciliter son introduction dans l'ouverture d'un réservoir du véhicule 6. L'extrémité de la perche 26 comprend également un dispositif de verrouillage ou de raccordement, permettant de raccorder efficacement la perche sur le véhicule 6, une fois celle-ci introduite dans l'ouverture du réservoir, et permettant d'assurer l'étanchéité au niveau de l'extrémité de la perche 26 lorsque celle-ci est retirée de l'ouverture du réservoir du véhicule 6.

Des moyens de localisation de l'orifice du réservoir du véhicule 6 peuvent être embarqués, sur le chariot 30 par exemple. Ces moyens de localisation comprennent par exemple des moyens de visualisation et de guidage permettant de diriger la perche 26, en direction de l'ouverture du réservoir.

Les moyens d'acheminement 22, les moyens de positionnement 28 ainsi que les moyens de localisation peuvent être commandés via une unité de commande, par un opérateur ou peuvent être automatisés.

Le système de ravitaillement 2 comporte de plus une plate-forme secondaire 36, en forme générale d'anneau. La plate-forme secondaire 36 est coaxiale à la plate-forme principale 4 et est agencée autour de ladite plate-forme principale 4. La plate-forme secondaire 36 supporte des équipements destinés à être positionnés autour du véhicule 6 situé sur la plate-forme principale 4, lors de son ravitaillement. La plate-forme secondaire 36 est également mobile en rotation, à la fois par rapport à la plate-forme principale 4 et par rapport au socle 12 fixe. L'unité de commande permet de contrôler en rotation la plate-forme secondaire 36.

La plate-forme secondaire 36 supporte par exemple des équipements nécessaires à l'avitaillement, des équipements de protection incendie 38 ou de surveillance 40, ou une passerelle de transbordement amovible.

Le système de ravitaillement 2 comprend également un dispositif de guidage 42 permettant de guider l'approche du véhicule 6 vers la plate-forme principale 4, en particulier dans le cas où le véhicule 6 est un aéronef. Le dispositif de guidage 42 comprend des moyens de détection de l'orientation du véhicule 6, tels par exemple qu'un système d'atterrissage aux instruments ou ILS (« Instrument Landing System », en anglais), et des moyens de déplacement de la plate-forme secondaire 36 en fonction de l'orientation du véhicule 6, afin de disposer au mieux les équipements autour du véhicule 6.

Le système de ravitaillement 2 comporte de plus des moyens de détection de la position et/ou de l'orientation du véhicule 6 par rapport à la plate-forme principale 4 et/ou par rapport à la plate-forme secondaire 36.

Nous décrirons ci-après un procédé de ravitaillement d'un véhicule 6 à l'aide du système de ravitaillement 2 selon l'invention.

Ce procédé comporte tout d'abord une étape d'approche du véhicule 6, ici un aéronef.

Lors de cette étape d'approche, la position et l'orientation de l'aéronef 6 par rapport à la plate-forme principale 4 sont détectés, notamment par l'intermédiaire du dispositif de guidage précités, de façon à faciliter l'atterrissage de l'aéronef 6 sur la plate-forme principale 4.

Une fois l'aéronef 6 posé sur la plate-forme principale 4, le système de ravitaillement 2 permet de réaliser une étape de rechargement de l'accumulateur 16 électrique du véhicule, ici une batterie, et/ou une étape de rechargement du réservoir de carburant du véhicule 6, s'il s'agit d'un véhicule à propulsion hybride ou purement thermique.

Ces deux étapes peuvent être réalisées simultanément ou successivement.

On décrira tout d'abord l'étape de rechargement de l'accumulateur 16 électrique.

Une fois que le véhicule 6 est situé sur la plate-forme principale 4, un contact électrique est établi entre les pôles électriques 14, 18 de l'accumulateur 16 du véhicule 6 d'une part, à savoir l'anode 14 et la cathode 18, et les dalles électriques 8 d'autre part, par le biais de contacteurs. La figure 2 illustre le cas où le véhicule est un hélicoptère 6 comportant des patins 44. Les contacteurs précités sont alors formés par les patins 44, assurant la liaison électrique entre les dalles 8 concernées de la plate-forme principale 4 et les pôles électriques 14, 18 de l'accumulateur 16.

Comme on peut le voir dans l'exemple de la figure 2 où le nombre de dalles est volontairement réduit dans un souci de clarté, les dalles A₁₂, A₂₁, A₂₂ et les dalles A₂₃, A₂₄, A₃₃ sont en contact avec les pôles 14,18 de l'accumulateur 16 électrique via les patins 44 de du véhicule 6.

Les moyens de détection du système de ravitaillement 2 permettent de détecter au moins une dalle 8 en contact avec une anode 14 reliée à l'accumulateur 16 électrique du véhicule 6, et au moins une dalle 8 en contact avec une cathode 18 reliée à l'accumulateur 16 électrique du véhicule. Dans l'exemple illustré à la figure 2, les moyens de détection permettent d'identifier au moins une des dalles A₁₂, A₂₁, A₂₂ qui sont en contact avec l'anode 14 de l'accumulateur 16 électrique du véhicule 6 et au moins une des dalles A₂₃, A₂₄, A₃₃ qui sont en contact avec la cathode 18 de l'accumulateur 16 électrique du véhicule 6.

Les moyens de détection précités peuvent mettre en œuvre deux procédés de détection des dalles A₁₂, A₂₁, A₂₂, A₂₃, A₂₄ et A₃₃ en contact avec l'anode 14 ou la cathode 18.

Le premier procédé de détection des dalles A₁₂, A₂₁, A₂₂, A₂₃, A₂₄ et A₃₃ consiste, à l'aide de la carte électronique d'acquisition de données, à mesurer le potentiel électrique ou l'impédance électrique de chaque dalle 8 de la plate-forme principale 4. En effet, les dalles 8 qui ne sont en contact ni avec l'anode 14 ni avec la cathode 18 de l'accumulateur 16 électrique présentent un potentiel électrique nul et une impédance qui est par exemple de l'ordre de plusieurs megOhms.

Le deuxième procédé de détection des dalles A₁₂, A₂₁, A₂₂, A₂₃, A₂₄ et A₃₃ consiste, à l'aide de la carte électronique d'acquisition de données, à mesurer la tension (c'est-à-dire la différence de potentiels) ou l'impédance entre deux dalles 8, pour toutes les dalles de la plate-forme principale 4.

Un algorithme, reprenant l'un des deux procédés, est implémenté sur une unité de traitement, communiquant avec la carte électronique d'acquisition de données. Ainsi, les mesures de tension et d'impédance sont analysées par l'unité de traitement qui, en comparant les valeurs de tensions et d'impédance tel que décrit précédemment, détecte les dalles A₁₂, A₂₁, A₂₂, A₂₃, A₂₄ et A₃₃ en contact électrique avec l'anode 14 ou la cathode 18 de l'accumulateur 16 électrique du véhicule 6.

Par la suite, les moyens de rechargement alimentent les pôles de l'accumulateur 16 par le biais des dalles détectées A₁₂, A₂₁, A₂₂, A₂₃, A₂₄ et A₃₃, en respectant la polarité des dalles détectées A₁₂, A₂₁, A₂₂, A₂₃, A₂₄ et A₃₃, de l'anode 14 et de la cathode 18 de l'accumulateur 16 électrique.

Pour cela, les moyens de commutation, comme par exemple des relais électromagnétiques, assurent l'alimentation en courant électrique uniquement des dalles détectées A₁₂, A₂₁, A₂₂, A₂₃, A₂₄ et A₃₃. Les autres dalles 8 de la plate-forme principale 4, qui ne sont pas en contact avec les pôles 14, 18 de l'accumulateur 16 électrique, sont ainsi maintenues à une polarité neutre. On notera qu'il est possible d'alimenter uniquement l'une des dalles A₁₂, A₂₁, A₂₂ connectées à l'anode 14 et l'une des dalles A₂₃, A₂₄, A₃₃ connectées à la cathode 18, même si plusieurs dalles sont détectées pour chaque pôle de l'accumulateur 16.

Les moyens de rechargement commandent également l'armoire électrique 10 de sorte qu'elle délivre un courant électrique adapté à la polarité de l'accumulateur 16. Par conséquent, l'accumulateur 16 du véhicule 6 est rechargé avec un courant adapté.

Les moyens de détection du niveau de charge de l'accumulateur 16 électrique et/ou du type d'accumulateur 16 électrique peuvent également permettre d'adapter le courant de rechargement de l'accumulateur 16 électrique du véhicule 6. Dans ce cas, les moyens de recharge, en prenant en compte la polarité, le niveau de charge de l'accumulateur 16 électrique ainsi que les spécifications techniques de l'accumulateur 16, commandent l'armoire électrique 10 afin qu'elle délivre aux dalles détectées A₁₂, A₂₁, A₂₂, A₂₃, A₂₄ et A₃₃ un courant adapté, avec une intensité et une tension optimisées. Le paramètre lié à la durée de charge souhaitée peut en outre être pris en compte pour adapter le courant de rechargement.

La détection du niveau de charge de l'accumulateur 16 électrique peut être obtenue, par exemple, en mesurant la tension aux bornes de l'accumulateur 16 par un équipement du véhicule 6 ou de la plate-forme principale 4, ou encore par la télétransmission de l'information par le véhicule 6 au système de ravitaillement 2. Dans ce dernier cas, le niveau de charge peut par exemple être calculé par un calculateur embarqué dans le véhicule 6, en fonction de l'historique de charge de la batterie 16, de données liées au vol ou liées à la distance parcourue, de paramètres du véhicule 6 ou de paramètres propres à la batterie, tels notamment que la température.

La détection du type de l'accumulateur 16, c'est-à-dire par exemple l'acquisition des spécifications techniques de l'accumulateur 16, peut être effectuée par télétransmission de l'information par le véhicule 6, ou via par exemple une étiquette RFID disposée sur ou dans le véhicule 6.

La détection du niveau de charge de l'accumulateur 16 et de son type, ainsi que l'adaptation du courant de rechargement en conséquence, rendent les moyens de rechargement compatibles avec tous les types d'accumulateurs pouvant être intégrés dans les véhicules, tels que les batteries ou les super-condensateurs.

Les moyens de détection et de rechargement peuvent être commandés via une unité de commande par un opérateur, ou peuvent être automatisés.

L'étape de ravitaillement du véhicule 6 en carburant, tel par exemple que de l'essence, du kérosène ou de l'hydrogène, va maintenant être décrite en référence à la figure 3.

A l'aide des moyens de localisation, la perche 26 est déplacée pour se diriger vers l'ouverture du réservoir du véhicule 6, au travers de l'une des ouvertures des dalles 8 de plate-forme principale 4. La perche 26 mobile est alors déployée en direction de l'ouverture du réservoir à l'aide des moyens de positionnement 28. Les moyens de verrouillage permettent alors de fixer l'extrémité de la perche 26 une fois que cette dernière est introduite dans l'ouverture du réservoir.

Après raccordement de la perche 26 au véhicule 6, le système d'acheminement 22 du réservoir procède au remplissage du réservoir en carburant provenant du réservoir principal 24 du système de ravitaillement 2.

Après le remplissage du réservoir, les moyens de verrouillage sont déverrouillés afin de libérer la perche 26. La perche 26 est alors rétractée sous la plate-forme principale 4.

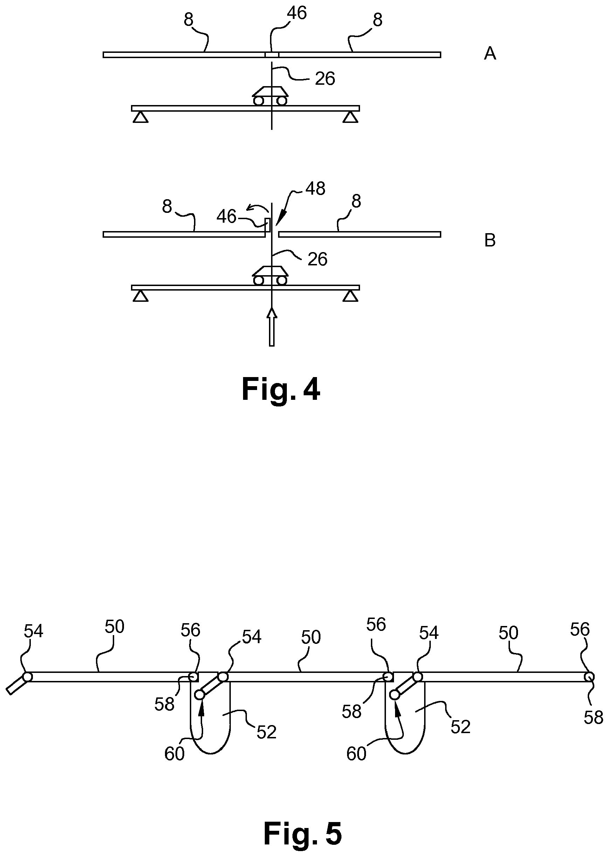

Les figures 4 à 6 illustrent plus précisément le mécanisme permettant le passage de la perche 26 à travers les ouvertures 48 des dalles 8. Comme illustré à la figure 4, l'ouverture entre deux dalles 8 peut être ouverte ou fermée par le biais d'une plaque pivotante 46.

Lors du mouvement vertical de la perche 26 en direction de l'ouverture du réservoir de l'aéronef, l'extrémité de la perche 26 prend appui sur la plaque 46 et fait pivoter cette dernière. La plaque pivotante 46 est ainsi mobile entre une position fermée, visible sur la partie A de la figure 4, et une position ouverte, visible sur la partie B de la figure 4.

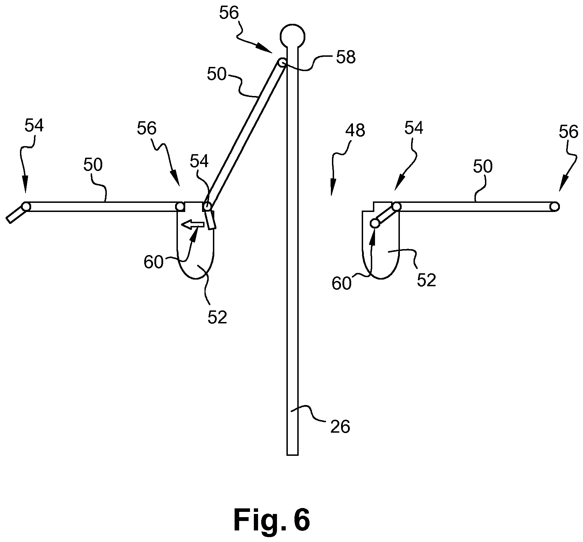

Selon une autre forme de réalisation illustrée aux figures 5 et 6, au moins certaines des dalles 8 peuvent être pivotantes par rapport à des supports de dalles 52, entre une position fermée illustrée à la figure 5 et une position ouverte illustrée à la figure 6. Les dalles pivotantes sont référencées 50 sur ces figures. En particulier, une première extrémité 54 des dalles pivotantes 50 peut être montée par l'intermédiaire d'un pivot sur le support de dalle 52, une deuxième extrémité 56 de la dalle pivotante 50 pouvant être pourvue de moyens de roulement ou de galets 58. Lesdits moyens de roulement ou galets 58 sont configurés pour reposer sur le support de dalle 52 lorsque l'ouverture 48 est fermée, et pour être en contact avec la perche 26 lors de son passage au travers de l'ouverture 48.

Chaque dalle pivotante 50 peut être rappelée vers sa position fermée par l'intermédiaire de moyens de rappel 60.

Dans le cas particulier où le véhicule 6 est un aéronef, la plate-forme principale 4 peut être déplacée en rotation pour orienter l'aéronef face au vent à la fin du ravitaillement, de manière à faciliter le décollage de l'aéronef.

Le système de ravitaillement 2 décrit peut être utilisé pour tout type de véhicule 6, comme par exemple des véhicules terrestres, ou encore des aéronefs à décollage et à atterrissage verticaux ou VTOL (« Vertical Take-Off and Landing » en anglais).

Le système de ravitaillement 2 peut également être utilisé pour des véhicules 6 non hybrides, c'est-à-dire utilisant uniquement un ou plusieurs moteurs électriques, ou utilisant uniquement un ou plusieurs moteurs thermiques.

## Revendications

1. Système de ravitaillement (2) pour un véhicule (6), le système comprenant :
- une plate-forme principale (4) apte à soutenir le véhicule (6) positionné de façon aléatoire, comportant une pluralité de dalles (8) conductrices, électriquement isolées les unes des autres,
- des moyens de détection et de rechargement d'un accumulateur (16) électrique du véhicule (6), lesdits moyens de détection et de rechargement étant aptes à :
• détecter au moins une dalle (8) en contact avec une anode (14) reliée à l'accumulateur (16), et au moins une dalle (8) en contact avec une cathode (18) reliée à l'accumulateur (16),
• recharger ledit accumulateur (16) au travers des dalles (8) conductrices, de l'anode (14) et de la cathode (18),
- **caractérisé en ce que** le système comprend:
des moyens d'acheminement (22) d'un carburant liquide ou gazeux, aptes à recharger un réservoir du véhicule (6), les moyens d'acheminement (22) du carburant comportant au moins une perche (26) mobile entre une position rétractée dans laquelle la perche (26) est apte à être écartée du véhicule (6), et une position déployée dans laquelle la perche (26) est apte à être raccordée à un réservoir du véhicule (6), les dalles (8) comportant des ouvertures permettant le passage de la perche (26), notamment en position déployée.

2. Système de ravitaillement (2) selon la revendication 1, **caractérisé en ce que** la perche (26) est mobile dans au moins une direction (Z), par exemple verticalement.

3. Système de ravitaillement (2) selon la revendication 1 ou 2, **caractérisé en ce que** la perche (26) est mobile dans trois directions, par exemple verticalement et selon deux directions horizontales (X,Y).

4. Système de ravitaillement (2) selon l'une des revendications 1 à 3, **caractérisé en ce qu'**il comporte des moyens de localisation d'un orifice du réservoir du véhicule (6) et des moyens de positionnement (28) de la perche (26) aptes à déplacer la perche (26) de façon à ce qu'elle puisse être connectée à l'orifice du réservoir en position déployée.

5. Système de ravitaillement (2) selon l'une des revendications 1 à 4, **caractérisé en ce qu'**il comporte des moyens de détection du niveau de charge de l'accumulateur (16) électrique et/ou du type d'accumulateur (16) électrique.

6. Système de ravitaillement (2) selon l'une des revendications 1 à 5, **caractérisé en ce que** les moyens de détection de l'anode (14) et de la cathode (18) sont conçus pour :
- déterminer le potentiel électrique ou l'impédance de chaque dalle (8) conductrice de la plate-forme principale (4),
- en déduire au moins une dalle (8) en contact avec l'anode (14) et au moins une dalle (8) en contact avec la cathode (18).

7. Système de ravitaillement (2) selon l'une des revendications 1 à 6, **caractérisé en ce qu'**il comporte une plate-forme secondaire (36) supportant des équipements destinés à être positionnés par rapport au véhicule (6), ladite plate-forme secondaire (36) étant mobile, par exemple mobile en rotation.

8. Système de ravitaillement (2) selon la revendication 7, **caractérisé en ce qu'**il comporte des moyens de guidage du véhicule (6), tels par exemple qu'un système d'atterrissage aux instruments, et des moyens de déplacement de la plate-forme secondaire (36) en fonction de l'orientation du véhicule (6).

## Patentansprüche

1. Betankungssystem (2) für ein Luftfahrzeug (6), wobei das System folgendes umfasst:
- eine Hauptplattform (4), auf der das Luftfahrzeug (6) in beliebiger Position abgestellt werden kann, mit einer Vielzahl von leitfähigen Platten (8), die gegeneinander elektrisch isoliert sind,
- Mittel zur Erkennung und zum Laden eines elektrischen Akkumulators (16) des Luftfahrzeugs (6), wobei diese Erkennungs- und Lademittel in der Lage sind:
• mindestens eine Platte (8) zu erkennen, die in Kontakt mit einer mit dem Akkumulator (16) verbundenen Anode (14) ist, und mindestens eine Platte (8), die in Kontakt mit einer mit dem Akkumulator (16) verbundenen Kathode (18) ist,
• den Akkumulator (16) über die leitfähigen Platten (8), die Anode (14) und die Kathode (18) aufzuladen,
- **dadurch gekennzeichnet, dass** das System folgendes umfasst: Mittel zur Beförderung (22) eines flüssigen oder gasförmigen Kraftstoffs, die in der Lage sind, einen Tank des Luftfahrzeugs (6) zu befüllen, wobei die Mittel zur Beförderung (22) des Kraftstoffs mindestens eine Stange (26) umfassen, die zwischen einer eingefahrenen Position, in der die Stange (26) vom Luftfahrzeug (6) entfernt werden kann, und einer ausgefahrenen Position, in der die Stange (26) an einen Tank des Luftfahrzeugs(6) angeschlossen werden kann, beweglich ist, wobei die Platten (8) Öffnungen zum Durchführen der Stange (26) umfassen, insbesondere wenn sich diese in der ausgefahrenen Position befindet.

2. Betankungssystem (2) nach Anspruch 1, **dadurch gekennzeichnet, dass** die Stange (26) in mindestens einer Richtung (Z), beispielsweise vertikal, beweglich ist.

3. Betankungssystem (2) nach Anspruch 1 oder 2, **dadurch gekennzeichnet, dass** die Stange (26) in drei Richtungen, beispielsweise in einer vertikalen und in zwei horizontalen Richtungen (X,Y) beweglich ist.

4. Betankungssystem (2) nach einem der Ansprüche 1 bis 3, **dadurch gekennzeichnet, dass** es Mittel zur Lokalisierung einer Tanköffnung am Luftfahrzeug (6) und Mittel (28) zur Positionierung der Stange (26) umfasst, die in der Lage sind, die Stange (26) so zu verschieben, dass sie in der ausgefahrenen Position an die Öffnung des Tanks angeschlossen werden kann.

5. Betankungssystem (2) nach einem der Ansprüche 1 bis 4, **dadurch gekennzeichnet, dass** es Mittel zur Erkennung des Ladestands des elektrischen Akkumulators (16) und/oder des Typs des elektrischen Akkumulators (16) umfasst.

6. Betankungssystem (2) nach einem der Ansprüche 1 bis 5, **dadurch gekennzeichnet, dass** die Mittel zur Erkennung der Anode (14) und der Kathode (18) so konzipiert sind, dass:
- das elektrische Potential oder die Impedanz jeder leitfähigen Platte (8) der Hauptplattform (4) bestimmt werden kann,
- daraus mindestens eine in Kontakt mit der Anode (14) und mindestens eine in Kontakt mit der Kathode (18) befindliche Platte (8) abgeleitet werden kann.

7. Betankungssystem (2) nach einem der Ansprüche 1 bis 6, **dadurch gekennzeichnet, dass** es eine Nebenplattform (36) umfasst mit Ausrüstungen, die relativ zum Luftfahrzeug (6) positioniert werden, wobei die sekundäre Plattform (36) beweglich, zum Beispiel drehbar, ist.

8. Betankungssystem (2) nach Anspruch 7, **dadurch gekennzeichnet, dass** es Mittel zur Führung des Luftfahrzeugs (6), wie zum Beispiel ein Instrumentenlandesystem, und Mittel zum Bewegen der Nebenplattform (36) in Abhängigkeit von der Ausrichtung des Luftfahrzeugs (6) umfasst.

## Claims

1. Refuelling system (2) for a vehicle (6), the system comprising:
- a main platform (4) capable of supporting the randomly positioned vehicle (6), comprising a plurality of conductive slabs (8), electrically insulated from each other,
- means for detecting and recharging an electric accumulator (16) of the vehicle (6), said means for detecting and recharging being capable of:
• detecting at least one slab (8) in contact with an anode (14) connected to the accumulator (16), and at least one slab (8) in contact with a cathode (18) connected to the accumulator (16),
• recharging said accumulator (16) through the conductive slabs (8), the anode (14) and the cathode (18),
- **characterised in that** the system comprises: means (22) for conveying a liquid or gaseous fuel, capable of recharging a tank of the vehicle (6), the means (22) for conveying the fuel comprising at least one pole (26) movable between a retracted position in which the pole (26) is capable of being moved away from the vehicle (6), and a deployed position in which the pole (26) is suitable for being connected to a vehicle tank (6), the slabs (8) having openings allowing the pole (26) to pass through, in particular in the deployed position.

2. Refuelling system (2) according to claim 1, **characterised in that** the pole (26) is movable in at least one direction (Z), for example vertically.

3. Refuelling system (2) according to claim 1 or 2, **characterised in that** the pole (26) is movable in three directions, for example vertically and in two horizontal directions (X,Y).

4. Refuelling system (2) according to one of claims 1 to 3, **characterised in that** it comprises means for locating an orifice of the vehicle tank (6) and means (28) for positioning the pole (26) capable of displacing the pole (26) so that it can be connected to the orifice of the tank in the deployed position.

5. Refuelling system (2) according to one of claims 1 to 4, **characterised in that** it comprises means for detecting the charge level of the electric accumulator (16) and/or the type of electric accumulator (16).

6. Refuelling system (2) according to one of claims 1 to 5, **characterised in that** the anode (14) and the cathode (18) detection means are designed to:
- determine the electrical potential or impedance of each conductive slab (8) of the main platform (4),
- deduce therefrom at least one slab (8) in contact with the anode (14) and at least one slab (8) in contact with the cathode (18).

7. Refuelling system (2) according to one of claims 1 to 6, **characterised in that** it comprises a secondary platform (36) supporting equipment intended to be positioned with respect to the vehicle (6), said secondary platform (36) being movable, for example rotatable.

8. Refuelling system (2) according to claim 7, **characterised in that** it comprises means for guiding the vehicle (6), such as for example an instrument landing system, and means for moving the secondary platform (36) according to the orientation of the vehicle (6).
